# EUROPÄISCHE PATENTANMELDUNG

(11) **EP 0 869 050 A1**
(43) Veröffentlichungstag der Anmeldung: **07.10.1998**
(21) Anmeldenummer: 97104560.4
(22) Anmeldetag: 18.03.1997
(51) Int. Cl.: B62D 53/06, B62D 21/14, B60D 1/155

(54) **Vorrichtung zur Längenveränderung des Achsabstandes eines Fahrzeugs oder der Zugeinrichtung eines Gliederzuges**

(71) Anmelder: BPW Bergische Achsen Kommanditgesellschaft, 51674 Wiehl (DE)
(72) Erfinder: Rossenbach, Bernhard, 57597 Morsbach (DE); Kretschmer, Rainer, 51545 Waldbröl (DE); Rosendahl, Marco, 51674 Wiehl (DE)
(74) Vertreter: Stenger, Watzke & Ring Patentanwälte

(57) **Zusammenfassung**

Die Erfindung betrifft eine Vorrichtung zur Längenveränderung des Achsabstandes eines Fahrzeuges, insbesondere zur Längenveränderung des Fahrgestells (F) eines Anhängers (A) oder Sattelanhängers (A), oder zur Längenveränderung der Zugeinrichtung (LZ) eines aus Zugfahrzeug (Z) und Anhänger (A) bestehenden Gliederzuges, wobei die Vorrichtung mindestens in den Endstellungen durch eine druckmittelbetätigte Einrichtung (E) verriegelbar ist. Um eine Betätigung der Einrichtung (E) zum Entriegeln und erneuten Verriegeln vom Führerhaus des Zugfahrzeuges (Z) zu ermöglichen, ohne daß der Fahrer das Führerhaus verlassen muß, hierbei jedoch sicherzustellen, daß ein Entriegeln während der Fahrt ausgeschlossen ist, ist die druckmittelbetätigte Einrichtung (E) ausschließlich im Stillstand des Fahrzeuges mittels einer Sicherheitsschaltung betätigbar.

## Beschreibung

Die Erfindung betrifft eine Vorrichtung zur Längenveränderung des Achsabstandes eines Fahrzeugs, insbesondere zur Längenveränderung des Fahrgestells eines Anhängers oder Sattelanhängers, oder zur Längenveränderung der Zugeinrichtung eines aus Zugfahrzeug und Anhänger bestehenden Gliederzuges, wobei die Vorrichtung mindestens in den Endstellungen durch eine druckmittelbetätigte Einrichtung verriegelbar ist.

Um unter Berücksichtigung der gesetzlich vorgeschriebenen Gesamtlänge von aus Zugfahrzeug und Anhänger bestehenden Lastzügen eine größtmögliche Länge der Ladefläche zu verwirklichen, sind Gliederzüge bekannt, bei denen der vorzugsweise als Zentralachs- oder Drehschemelanhänger ausgeführte Anhänger mittels einer längenveränderlichen Zugeinrichtung mit dem Zugfahrzeug verbunden ist. Im normalen Fahrbetrieb befindet sich diese Zugeinrichtung in ihrer eingeschobenen Fahrstellung, so daß die maximal zulässige Gesamtlänge eingehalten wird. Wenn jedoch steile Rampen, beispielsweise bei der Verladung auf Fähren, befahren werden müssen oder für den Durchladebetrieb zwischen der Ladefläche des Zugfahrzeuges und des Anhängers eine Ladebrücke angeordnet werden soll, beispielsweise durch Herabschwenken einer am Heck des Zugfahrzeuges angeordneten Ladebordwand, kann die Zugeinrichtung ausgezogen werden. Hierbei ist es erforderlich, die Zugeinrichtung zumindest in ihrer eingeschobenen Fahrstellung und in ihrer ausgezogenen Endstellung zu verriegeln. Selbstverständlich können derartige längenveränderliche Zugeinrichtungen auch in einer oder mehreren Zwischenstellungen verriegelt werden, falls dies im Einzelfall erwünscht sein sollte. Bei den bekannten Konstruktionen kann eine derartige Verriegelung entweder von Hand oder mittels einer druckmittelbetätigten Einrichtung erfolgen.

Insbesondere in den USA sind Sattelzüge bekannt, bei denen der Achsabstand zwischen dem Achsaggregat des Sattelanhängers und der Hinterachse des Zugfahrzeugs veränderlich ist, um den gesetzlichen Vorschriften in den jeweiligen Bundesstaaten zu genügen. Diese Veränderung erfolgt durch ein Verschieben des Achsaggregats des Sattelanhängers relativ zu dessen Fahrgestell, so daß sich auch unterschiedliche Abstände des Abstandes zwischen der letzten Achse des Zugfahrzeugs und der ersten Achse des Achsaggregats des Sattelanhängers ergeben. Auch hier muß das Achsaggregat in der jeweiligen Stellung am Fahrgestell des Sattelanhängers verriegelt werden.

Schließlich sind Anhänger, insbesondere für den Transport langer Ladegüter, wie Langholz oder Fertigbauteilen, bekannt, bei denen das Fahrgestell in ein vorzugsweise mit einem Drehschemel versehenes Vorderteil und ein mit einem Achsaggregat mit mindestens einer Achse versehenes Hinterteil aufgeteilt ist, die relativ zueinander verschiebbar sind. In der Stellung mit dem größten Abstand zwischen der lenkbaren Vorderachse und dem hinteren Achsaggregat dient der Anhänger dem Transport langer Ladegüter; bei unbeladenem Anhänger wird der Abstand auf ein Minimum verringert. Selbstverständlich können Vorderteil und Hinterteil dieses Anhängers auch in Zwischenstellungen gebracht werden, wobei in jeder Gebrauchsstellung eine Verriegelung erfolgt.

Bei den bekannten Vorrichtungen erfolgt die Längenveränderung des Achsabstandes des jeweiligen Fahrzeugs bzw. die Längenveränderung der Zugeinrichtung durch Festlegen mindestens einer der hinteren Achsen des Anhängers, beispielsweise durch Bremskeile, und Vorziehen bzw. Rücksetzen des Zugfahrzeugs, nachdem die Verriegelung gelöst worden ist. Diese Verriegelung wird durch eine druckmittelbetätigte Einrichtung betätigt.

Der Erfindung liegt die **Aufgabe** zugrunde, eine Betätigung der Einrichtung zum Entriegeln und erneuten Verriegeln vom Führerhaus des Zugfahrzeuges zu ermöglichen, ohne daß der Fahrer das Führerhaus verlassen muß, hierbei jedoch sicherzustellen, daß ein Entriegeln während der Fahrt ausgeschlossen ist.

Die **Lösung** dieser Aufgabenstellung durch die Erfindung ist dadurch gekennzeichnet, daß die druckmittelbetätigte Einrichtung ausschließlich im Stillstand des Fahrzeuges bzw. Gliederzuges mittels einer Sicherheitsschaltung betätigbar ist.

Durch diese Sicherheitsschaltung wird zuverlässig verhindert, daß ein Entriegeln der druckmittelbetätigten Einrichtung während der Fahrt erfolgt. Zu diesem Zweck umfaßt die Sicherheitsschaltung gemäß weiteren Merkmalen der Erfindung ein vorzugsweise am Anhänger angeordnetes Schaltventil, das durch einen vorzugsweise im Führerhaus des Zugfahrzeuges angeordneten Handtaster betätigbar ist und das sowohl einen Sperrzylinder als auch einen Betätigungszylinder der druckmittelbetätigten Einrichtung mit dem Druckmittelbehälter des Anhängers verbindet. Bei diesem Druckmittelbehälter des Anhängers handelt es sich vorzugsweise um den für die Anhänger-Bremsanlage vorgesehenen Druckluftbehälter.

Um die Längenveränderung des Achsabstandes bzw. der Zugeinrichtung durch Vorwärts- bzw. Rückwärtsfahren des Zugfahrzeuges bei gleichzeitigem Festhalten mindestens einer Hinterachse des Anhängers durchführen zu können, ohne daß deren Räder durch von Hand anzubringende Bremskeile blockiert werden müssen, umfaßt die Sicherheitsschaltung gemäß weiteren Merkmalen der Erfindung ein zweites Schaltventil, das parallel zum ersten Schaltventil angeordnet und damit gleichzeitig vom Handtaster betätigbar ist und das seinerseits die Bremsanlage des Anhängers betätigt. Erfindungsgemäß kann dies dadurch geschehen, daß das zweite Schaltventil entweder einen Zusatzbremszylinder betätigt oder einen die Radbremse des Anhängers betätigenden Federspeicher-Zylinder entlüftet.

Bei einer bevorzugten Ausführungsform der Erfindung sind die beiden Schaltventile als magnetisch betätigte 3/2-Wege-Ventile ausgebildet.

Um auf besonders einfache Art sicherzustellen, daß eine Entriegelung der längenveränderlichen Einrichtung ausschließlich im Stillstand der Fahrzeuge erfolgt, wird mit der Erfindung weiterhin vorgeschlagen, den Handtaster in Reihe mit dem durch Einlegen des Rückwärtsganges im Getriebe des Zugfahrzeuges einschaltbaren Rückfahrscheinwerfer zu schalten. Der Handtaster entfaltet somit nur dann seine Funktion, wenn der Rückwärtsgang des Zugfahrzeuges eingelegt ist.

Um in Weiterbildung der Erfindung eine Längenveränderung durch Vorwärtsfahren des Zugfahrzeuges zu ermöglichen, umfaßt die Sicherheitsschaltung gemäß einem weiteren Merkmal der Erfindung ein parallel zum Rückfahrscheinwerfer angeordnetes Relais, das durch einen vorzugsweise in der zum Sperrzylinder führenden Druckmittelleitung angeordneten Druckschalter betätigbar ist und durch Selbsthaltung die Freigabestellung des Sperrzylinders und Betätigungszylinders sowie gegebenenfalls die Betätigung der Radbremse des Anhängers bei betätigtem Handtaster aufrechterhält.

Sowohl der Sperrzylinder als auch der Betätigungszylinder sind bei einer bevorzugten Ausführungsform der Erfindung als ein durch Federkraft in seine Wirkstellung überführbarer Druckmittelzylinder ausgebildet, der durch Druckbeaufschlagung in eine Freigabestellung überführbar ist.

Die Sicherheitsschaltung umfaßt weiterhin einen Näherungsschalter, durch den der Verriegelungszustand der Zugeinrichtung mittels einer im Führerhaus des Zugfahrzeuges angebrachten Kontrolleuchte signalisiert wird, so daß der Fahrer zuverlässig über den Zustand der längenveränderlichen Zugeinrichtung informiert wird.

Der erfindungsgemäße, insbesondere als Zentralachs- oder Drehschemelanhänger ausgebildete Anhänger, der mit einer längenveränderlichen Zugeinrichtung versehen ist, die mindestens in der eingeschobenen Fahrstellung und in der ausgezogenen Endstellung durch eine druckmittelbetätigte Einrichtung arretierbar ist, ist durch eine Sicherheitsschaltung der voranstehend beschriebenen und in mindestens einem der Ansprüche 2 bis 10 definierten Art gekennzeichnet. Die zur Betätigung einer druckmittelbetätigten Einrichtung zur Arretierung einer längenveränderlichen Zugeinrichtung zwischen einem Zugfahrzeug und einem Anhänger bestimmte Sicherheitsschaltung der Erfindung ist gekennzeichnet, durch die Merkmale mindestens eines der Ansprüche 2 bis 10.

Auf der Zeichnung sind ein Ausführungsbeispiel eines Gliederzuges und einer zugehörigen längenveränderlichen Zugeinrichtung sowie Ausführungsbeispiele eines Sattelzuges mit relativ zum Auflieger verschiebbarem Achsaggregat und eines Lastzuges mit einem in Vorderteil und Hinterteil aufgeteilten Anhänger und schließlich zwei Ausführungsbeispiele einer Sicherheitsschaltung dargestellt, und zwar zeigt:
- Fig. 1: eine Seitenansicht eines Gliederzuges mit in der eingeschobenen Fahrstellung befindlicher Zugeinrichtung,
- Fig. 2: eine der Fig. 1 entsprechende Seitenansicht eines Gliederzuges mit in der ausgezogenen Endstellung befindlicher Zugeinrichtung,
- Fig. 3: eine vergrößerte Darstellung der längenveränderlichen Zugeinrichtung des Gliederzuges nach den Fig. 1 und 2 in der verriegelten Fahrstellung,
- Fig. 4: eine der Fig. 3 entsprechende Darstellung bei Beginn der Entriegelung,
- Fig. 5: eine weitere Darstellung der längenveränderlichen Zugeinrichtung nach der vollständigen Entriegelung und zu Beginn der Auszugsbewegung,
- Fig. 6: eine vierte Darstellung der Zugeinrichtung in der ausgezogenen sowie verriegelten Endstellung,
- Fig. 7: eine Seitenansicht eines Sattelzuges mit in der hinteren Endstellung befindlichem Achsaggregat des Sattelaufliegers,
- Fig. 8: eine der Fig. 7 entsprechende Darstellung mit in der vorderen Endstellung befindlichem Achsaggregat des Sattelaufliegers,
- Fig. 9: eine Seitenansicht eines Lastzuges aus Zugfahrzeug und Anhänger, dessen Fahrgestell ein Vorderteil und ein Hinterteil umfaßt, die relativ zueinander verschiebbar sind, und zwar in der verkürzten Stellung,
- Fig. 10: eine der Fig. 9 entsprechende Darstellung, bei der sich der Anhänger in der verlängerten Transportstellung befindet,
- Fig. 11: ein Schaltschema einer ersten Ausführungsform einer Sicherheitsschaltung und
- Fig. 12: ein Schaltbild einer zweiten Ausführungsform der Sicherheitsschaltung.

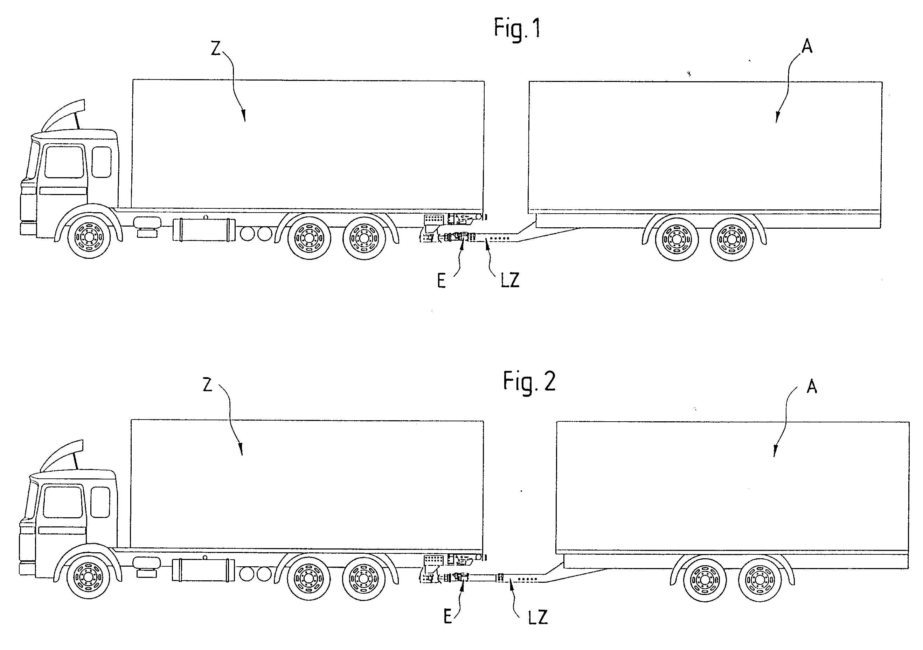

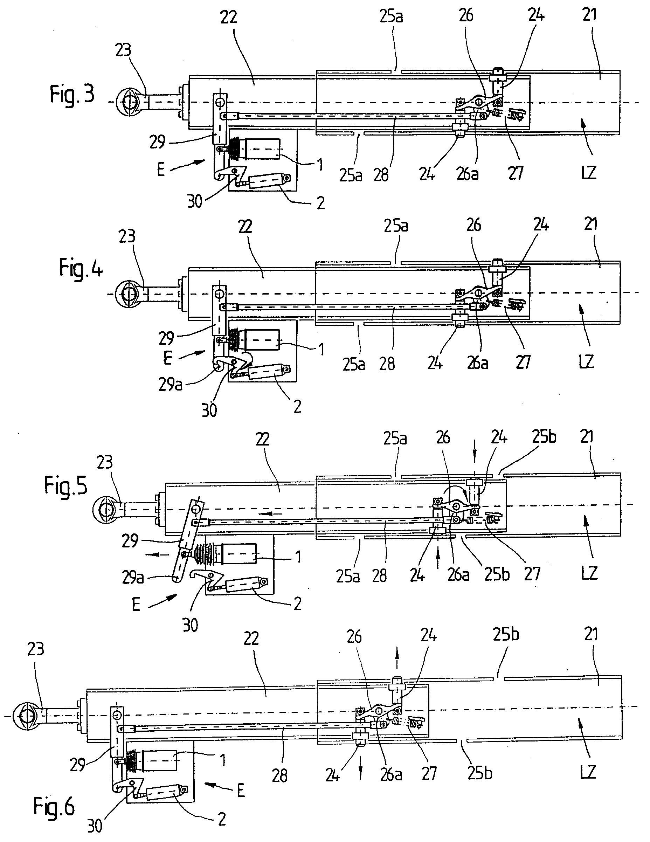

Der in den Fig. 1 und 2 dargestellte Gliederzug besteht aus einem Zugfahrzeug Z und einem beim Ausführungsbeispiel als Zentralachsanhänger ausgebildeten Anhänger A, der mit dem Zugfahrzeug Z über eine längenveränderliche Zugeinrichtung LZ verbunden ist. Diese ist sowohl in der eingeschobenen Fahrstellung gemäß Fig. 1 als auch in der ausgezogenen Endstellung gemäß Fig. 2 durch eine druckmittelbetätigte Einrichtung E arretierbar, die einen Betätigungszylinder 1 sowie einen Sperrzylinder 2 umfaßt. Diese sind in den Fig. 1 und 2 nicht dargestellt, aber in den Ausführungsbeispielen der Fig. 3 bis 6 sowie 11 und 12 zu erkennen.

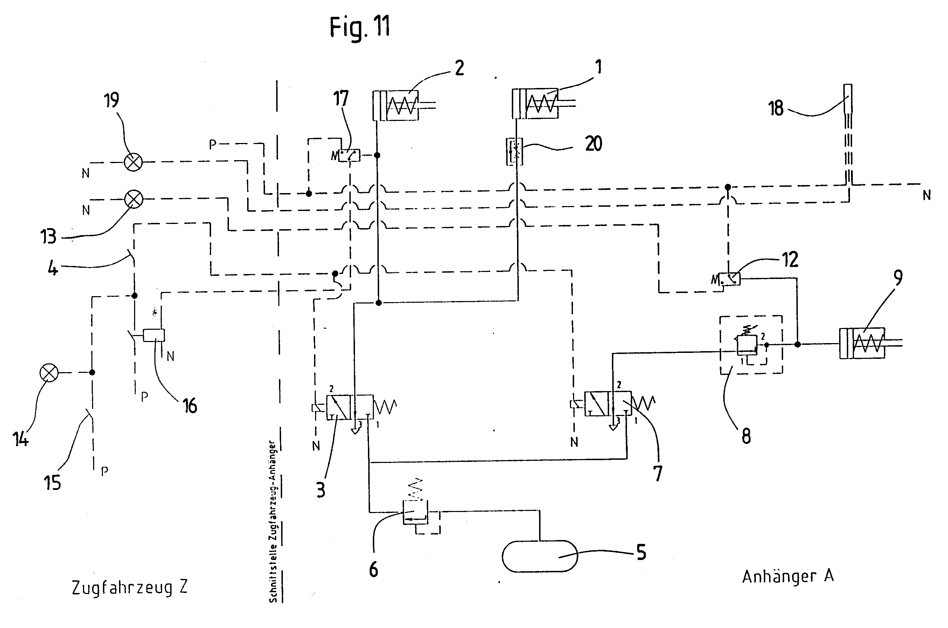

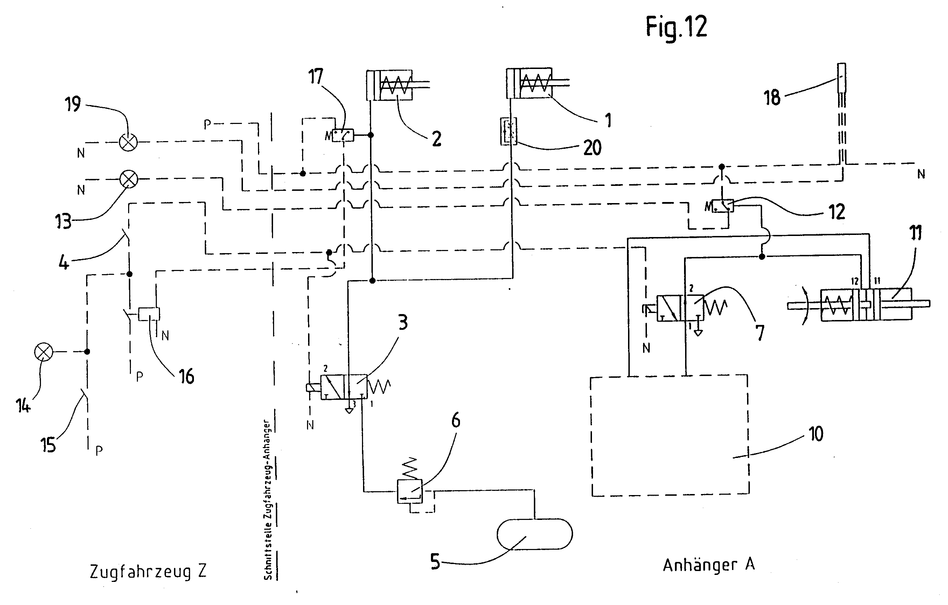

Die in den Fig. 11 und 12 anhand zweier Ausführungsbeispiele anhand eines Schaltbildes dargestellte Sicherheitsschaltung umfaßt außer dem Betätigungszylinder 1 und dem Sperrzylinder 2, die jeweils als ein durch Federkraft in seiner Wirkstellung gehaltener Druckmittelzylinder ausgebildet sind, der durch Druckbeaufschlagung in eine Freigabestellung überführbar ist, ein am Anhänger A angeordnetes Schaltventil 3, das durch einen im Führerhaus des Zugfahrzeuges Z angeordneten Handtaster 4 betätigbar ist und das sowohl den Betätigungszylinder 1 als auch den Sperrzylinder 2 mit dem Druckmittelbehälter 5 des Anhängers A verbindet. Im Normalfall handelt es sich bei diesem Druckmittelbehälter 5 um den zur Bremsanlage des Anhängers A gehörenden Druckluftbehälter. Bei den beiden Ausführungsbeispielen der Sicherheitsschaltung ist zwischen dem Schaltventil 3 und dem Druckmittelbehälter 5 jeweils ein Überströmventil 6 ohne Rückströmung angeordnet.

Parallel zum Schaltventil 3 ist bei beiden Ausführungsbeispielen ein zweites Schaltventil 7 angeordnet, das gleichzeitig mit dem ersten Schaltventil 3 vom Handtaster 4 betätigbar ist und das seinerseits unter Zwischenschaltung eines Druckbegrenzungsventils 8 die Bremsanlage des Anhängers A betätigt. Hinsichtlich der Ausgestaltung dieser Bremsanlage unterscheiden sich die beiden Ausführungsbeispiele nach den Fig. 11 und 12.

Während beim ersten Ausführungsbeispiel nach Fig. 11 die Radbremse des Anhängers A über die Sicherheitsschaltung durch einen Zusatzbremszylinder 9 betätigt wird, erfolgt beim zweiten Ausführungsbeispiel nach Fig. 12 eine Betätigung der Radbremse durch einen Eingriff in die Bremsanlage 10, indem über das Schaltventil 7 mindestens einer der in der Bremsanlage 10 vorhandenen Federspeicher-Zylinder 11 entlüftet wird. Bei beiden Ausführungen wird durch einen an die Druckmittelzufuhrleitung zum Zusatzbremszylinder 9 bzw. zum Federspeicher-Zylinder 11 angeschlossenen Druckschalter 12 überwacht, wenn die Bremseinrichtung betätigt wurde. Der Druckschalter 12 ist über eine Signalleitung mit einer Kontrolleuchte 13 im Führerhaus des Zugfahrzeuges Z verbunden, die auf diese Weise dem Fahrer signalisiert, daß der Anhänger A mit Hilfe der Sicherheitsschaltung eingebremst ist.

Um sicherzustellen, daß die bei beiden Ausführungsbeispielen als 3/2-Wege-Magnetventile ausgebildeten Schaltventile 3 und 7 ausschließlich bei Stillstand des Gliederzuges betätigt werden können, ist der Handtaster 4 in der zum Rückfahrscheinwerfer 14 führenden Stromleitung angeordnet, die nur dann mit Strom versorgt wird, wenn der zugehörige Schalter 15 durch Einlegen des Rückwärtsganges im Getriebe des Zugfahrzeuges Z geschlossen worden ist.

Parallel zum Rückfahrscheinwerfer 14 und seinem Schalter 15 ist an das Stromnetz des Zugfahrzeuges Z ein Relais 16 angeschlossen, das durch einen Druckschalter 17 bestromt wird, der sich in der Druckmittelzuleitung zum Sperrzylinder 2 befindet. Die Selbsthaltung des Relais 16 hält die Freigabestellung des Betätigungszylinders 1 und Sperrzylinders 2 und die Betätigung der Bremsanlage des Anhängers A aufrecht, auch wenn der Schalter 15 durch Herausnehmen des Rückwärtsganges wieder geöffnet worden ist, und zwar solange bis der Handtaster 4 losgelassen wird und hierdurch über den Druckschalter 17 das Relais 16 stromlos wird.

Die Sicherheitsschaltung umfaßt weiterhin einen Näherungsschalter 18, der die Betätigung der Verriegelung der längenveränderlichen Zugeinrichtung LZ überwacht und mittels einer im Führerhaus des Zugfahrzeuges Z angeordneten Kontrolleuchte 19 signalisiert. Schließlich zeigen beide Schaltbilder der Sicherheitsschaltung eine vor dem Betätigungszylinder 1 in der Druckmittelzuleitung angeordnete Drossel 20, die zur Einstellung der jeweils notwendigen Ansprechzeit des Betätigungszylinders 1 und des Verriegelungszylinders 2 verstellbar ist.

Wenn die längenveränderliche Zugeinrichtung LZ des Gliederzuges aus der eingeschobenen Fahrstellung nach Fig. 1 beispielsweise zum Überfahren einer Fährrampe verlängert werden soll, legt der Fahrer den Rückwärtsgang ein. Hierdurch wird der Schalter 15 für den Rückfahrscheinwerfer 14 geschlossen. Durch eine Betätigung des im Führerhaus des Zugfahrzeuges Z angeordneten Handtasters 4 wird nunmehr bei stillstehendem Gliederzug das Schaltventil 3 betätigt. Der Handtaster 4 muß während des gesamten Vorganges der Längenveränderung gedrückt werden. Das bei beiden Ausführungsbeispielen als 3/2-Wege-Magnetventil ausgebildete Schaltventil 3 gelangt somit aus der in den Fig. 11 und 12 dargestellten Entlüftungsstellung in seine Wirkstellung, in der es den Druckmittelbehälter 5 des Anhängers A sowohl mit dem Betätigungszylinders 1 als auch mit dem Sperrzylinder 2 der druckmittelbetätigten Einrichtung E verbindet. Durch den im Druckmittelbehälter 5 anstehenden Druck wird der Kolben sowohl des Betätigungszylinders 1 als auch des Sperrzylinders 2 entgegen seiner Federbelastung aus der Wirkstellung in eine Freigabestellung überführt, so daß die Verriegelung der längenveränderlichen Zugeinrichtung LZ in der eingeschobenen Fahrstellung aufgehoben ist.

Durch die Betätigung des Handtasters 4 wird gleichzeitig mit dem Schaltventil 3 das zweite Schaltventil 7 aus der Entlüftungsstellung in die Wirkstellung überführt, so daß auch der Zusatzbremszylinder 9 bzw. der FederspeicherZylinder 11 mit Druckmittel aus dem Druckmittelbehälter 5 beaufschlagt wird. Auf diese Weise wird der Anhänger A gebremst. Dieses Einbremsen des Anhängers A wird über den Druckschalter 12 erfaßt und durch die im Führerhaus des Zugfahrzeuges Z angeordnete Kontrolleuchte 13 signalisiert.

Über den in der Druckleitung zum Sperrzylinder 2 angeordneten Druckschalter 17 wird bei der Druckbeaufschlagung des Sperrzylinders 2 ein Signal abgegeben, das eine Betätigung des Relais 16 zur Folge hat, das parallel zum Schalter 15 des Rückfahrscheinwerfers 14 an die Stromquelle des Zugfahrzeuges angeschlossen ist. Da das Relais 16 für eine vorgebbare Schaltzeit durch Selbsthaltung die Stromversorgung des Handtasters 4 aufrechterhält, kann nunmehr der Rückwärtsgang herausgenommen und das Zugfahrzeug Z durch Einlegen eines Vorwärtsganges geringfügig nach vorn gefahren werden. Da der Anhänger A durch Betätigen des Handtasters 4 in Verbindung mit dem Relais 16 eingebremst bleibt, bewirkt das Vorfahren des Zugfahrzeuges Z ein Ausziehen der längenveränderlichen Zugeinrichtung LZ aus der eingeschobenen Fahrstellung in die ausgezogene Endstellung, die in Fig. 2 dargestellt ist, oder in Zwischenstellungen.

Nach Loslassen des Handtasters 4 fällt das Relais 16 ab, so daß die Stromzufuhr zu den Schaltventilen 3 und 7 unterbrochen wird. Die Schaltventile 3 und 7 kehren durch Federbelastung in ihre in den Fig. 11 und 12 dargestellte Entlüftungsstellung zurück. Hierdurch erfolgt eine Druckentlastung sowohl des Betätigungszylinders 1 und des Sperrzylinders 2 als auch des Zusatzbremszylinders 9 bzw. eine Belüftung des Federspeicher-Zylinders 11. Hierdurch wird sowohl die Zusatzbremseinrichtung des Anhängers A gelöst als auch die druckmittelbetätigte Einrichtung E durch Rückkehr sowohl des Betätigungszylinders 1 als auch des Sperrzylinders 2 in die Wirkstellung zurückgeführt, in der die längenveränderliche Zugeinrichtung LZ in den verriegelten Zustand überführt wird. Durch den Näherungsschalter 18 wird hierbei überwacht, ob diese Verriegelungsstellung der längenveränderlichen Zugeinrichtung LZ tatsächlich erreicht ist. Die Verriegelung wird durch Erlöschen der Kontrolleuchten 19 im Führerhaus des Zugfahrzeuges Z angezeigt. Der Gliederzug kann nunmehr mit ausgezogener Endstellung der längenveränderlichen Zugeinrichtung LZ gemäß Fig. 2 zum Befahren beispielsweise einer Fährrampe in Bewegung gesetzt werden.

Aus den voranstehenden Darlegungen geht hervor, daß durch die Sicherheitsschaltung sichergestellt wird, daß die druckmittelbetätigte Einrichtung E der längenveränderlichen Zugeinrichtung LZ ausschließlich im Stillstand des Gliederzuges betätigbar ist, wobei ein Entriegeln und Verriegeln erfolgt, ohne daß der Fahrer des Zugfahrzeuges Z sein Führerhaus verlassen muß.

Die Fig. 3 bis 6 zeigen ein Ausführungsbeispiel einer längenveränderlichen Zugeinrichtung LZ mit zugehöriger druckmittelbetätigter Einrichtung E zur Verriegelung in den beiden Endstellungen. Die längenveränderliche Zugeinrichtung LZ besteht bei diesem Ausführungsbeispiel aus einem am Fahrgestell des Anhängers A befestigten Außenrohr 21, in dem ein Innenrohr 22 längsverschiebbar geführt ist, das an seinem vorderen Ende eine Zugöse 23 trägt. Im Innenrohr 22 sind zwei gegenläufig betätigbare Riegelbolzen 24 angeordnet, die in Riegelöffnungen 25a bzw. 25b des Außenrohres 21 eingreifen, um die längenveränderliche Zugeinrichtung LZ entweder in der eingeschobenen Fahrstellung gemäß Fig. 3 oder in der ausgezogenen Endstellung gemäß Fig. 6 zu verriegeln.

Die Betätigung der Riegelbolzen 24 geschieht mittels einer Wippe 26 entgegen der Kraft einer Rückzugfeder 27 durch eine Betätigungsstange 28, deren hinteres Ende über einen starr mit der Wippe 26 verbundenen Zwischenhebel 26a mit der Wippe 26 und deren vorderes Ende über einen Schwenkhebel 29 mit dem Betätigungszylinder 1 verbunden ist. Das freie Ende des Schwenkhebels 29 trägt einen Riegelstift 29a, der mit einem Sperriegel 30 zusammenwirkt, der seinerseits durch den Sperrzylinder 2 betätigt wird.

Wie die Fig. 3 bis 6 erkennen lassen, hat der Sperrzylinder 2 ein kleineres Arbeitsvolumen als der Betätigungzylinder 1, so daß der Kolben des Sperrzylinders 2 vor dem Kolben des Betätigungszylinders 1 verschoben wird, obwohl die beiden Zylinder 1 und 2 gemäß den Schaltbildern in den Fig. 11 und 12 zueinander parallel geschaltet sind.

Hierdurch ergibt sich gemäß der Darstellung in den Fig. 3 bis 6, daß bei einer gleichzeitigen Druckbeaufschlagung des Betätigungszylinders 1 und Sperrzylinders 2 zuerst der Sperriegel 30 aus seiner in Fig. 3 gezeichneten Riegelstellung im Uhrzeigersinn in die in Fig. 4 dargestellte Freigabestellung verschwenkt wird, in der er den Riegelstift 29a freigibt. Durch die anschließene Bewegung der Kolbenstange des Betätigungszylinders 1 kann somit der entriegelte Schwenkhebel 29 gemäß Fig. 5 ebenfalls im Uhrzeigersinn verschwenkt werden.

Hierdurch wird gemäß Fig. 5 die Betätigungsstange 28 nach vorn gezogen, wodurch sich die Wippe 26 im Uhrzeigersinn dreht und hierbei die Riegelbolzen 24 aus den Riegelöffnungen 25b des Außenrohres 21 herausbewegt. Das Innenrohr 22 kann somit gemäß Fig. 5 nach vorn aus dem Außenrohr 21 herausgezogen werden bis die längenveränderliche Zugeinrichtung LZ ihre ausgezogene Endstellung gemäß Fig. 6 einnimmt. Wenn in dieser Endstellung der Betätigungszylinder 1 und der Sperrzylinder 2 drucklos wird, zieht die Rückzugfeder 27 die Betätigungsstange 28 wieder in ihre in Fig. 3 erkennbare Ausgangsstellung zurück. Über die Wippe 26 werden hierbei die Riegelbolzen 24 nunmehr in die Riegelöffnungen 25a des Außenrohres 21 verschoben. Gleichzeitig kehrt der Schwenkhebel 29 in seine Ausgangsstellung zurück, in der er über seinen Riegelstift 29a durch den Sperriegel 30 verriegelt wird.

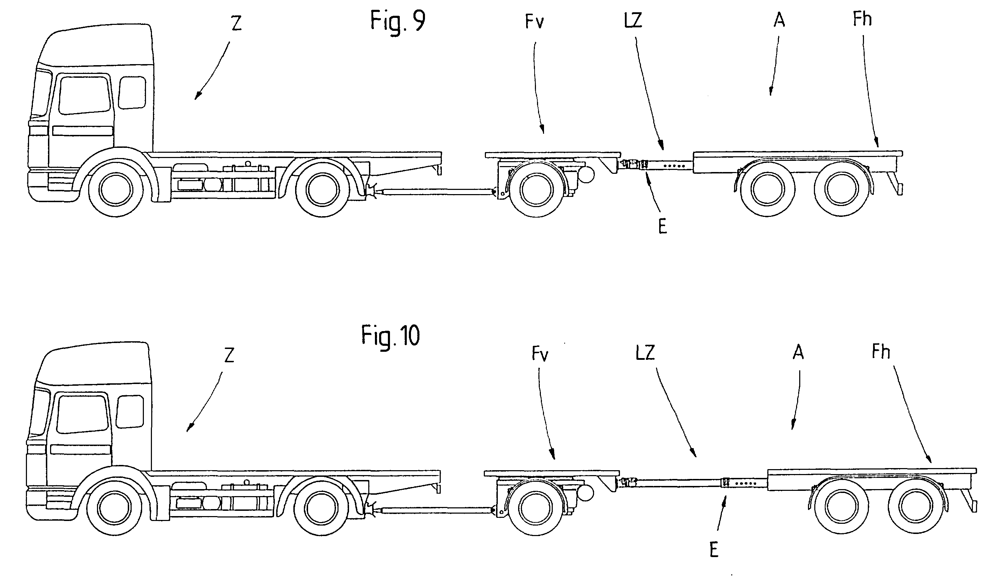

Eine der längenveränderlichen Zugeinrichtung LZ entsprechende Einrichtung besitzt auch der Anhänger A gemäß den Fig. 9 und 10. Diese verbindet das Fahrgestellvorderteil Fv, das beim Ausführungsbeispiel nach den Fig. 9 und 10 mit einem Drehschemel versehen ist, mit dem Fahrgestellhinterteil Fh, das beim Ausführungsbeispiel ein Achsaggregat mit zwei Achsen trägt.

Die voranstehend bezüglich der längenveränderlichen Zugeinrichtung LZ des Gliederzuges nach den Fig. 1 und 2 gemachten Darlegungen treffen somit in vollem Umfang auf den Anhänger A der Fig. 9 und 10 zu, dessen Fahrgestellvorderteil Fv und Fahrgestellhinterteil Fh relativ zueinander verschiebbar sind, wobei in der jeweiligen Endstellung sowie in möglichen Zwischenstellungen jeweils eine Verriegelung mit Hilfe der druckmittelbetätigen Einrichtung E erfolgt, wie sie voranstehend erläutert worden ist. Hierdurch ist es möglich, den Anhänger A für den Transport langer Güter in eine Situation zu bringen, die in Fig. 10 dargestellt ist. Bei Leerfahrten wird dagegen der Abstand zwischen dem Fahrgestellvorderteil Fv und dem Fahrgestellhinterteil Fh verkürzt, wie dies in Fig. 9 gezeichnet ist.

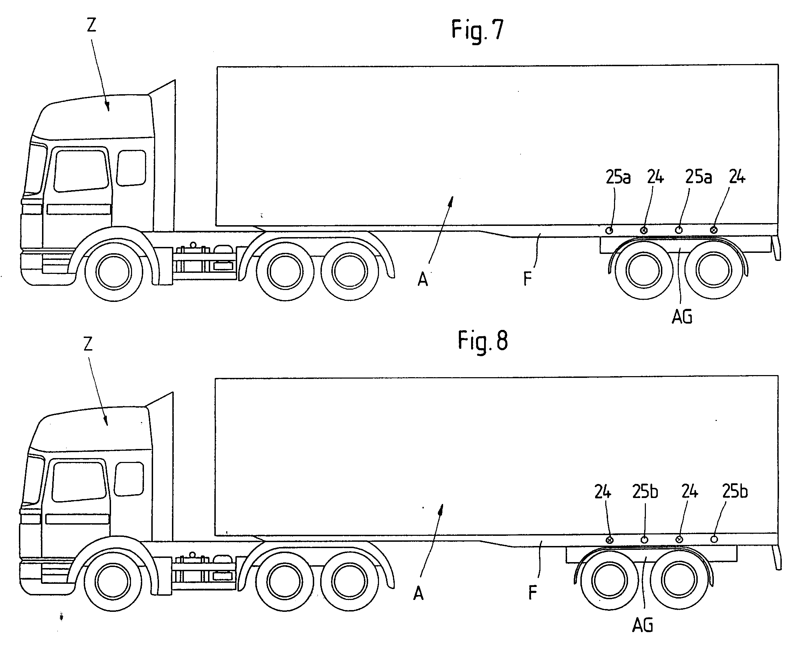

Die Fig. 7 und 8 zeigen schließlich einen Sattelzug aus einem Zugfahrzeug Z und einem Sattelanhänger A, der beim dargestellten Ausführungsbeispiel mit einem Achsaggregat AG versehen ist, das relativ zum Fahrgestell F des Sattelanhängers A verschiebbar ist.

Die Fig. 7 zeigt das Achsaggregat AG in der hinteren Endstellung, wogegen die Fig. 8 die vordere Endstellung des Achsaggregats AG zeigt. Die Relativbewegung des Achsaggregats AG zum Fahrgestell F erfolgt in der Art der Längenveränderung der Zugeinrichtung LZ, wobei beide Endstellungen wiederum mittels einer druckmittelbetätigten Einrichtung E verriegelt werden. Die im Fahrgestell F ausgebildeten vorderen und hinteren Riegelöffnungen 25a und 25b sind in den Fig. 7 und 8 angedeutet. Auch die zugehörigen Riegelbolzen 24 sind zu erkennen.

Auch bei den Ausführungsbeispielen nach den Fig. 7 und 8 sowie 9 und 10 wird durch die in den Fig. 11 und 12 anhand zweier Ausführungsbeispiele dargestellte Sicherheitsschaltung sichergestellt, daß die Veränderung des Abstandes zwischen den hinteren Achsen des Achsaggregates AG bzw. des Fahrgestellhinterteils Fh und der hinteren Achse des Zugfahrzeuges Z bzw. der lenkbaren Achse des Fahrgestellvorderteils Fv ausschließlich im Stillstand der Fahrzeuge vorgenommen werden kann, wobei ein Entriegeln und Verriegeln der jeweiligen Endstellungen erfolgt, ohne daß der Fahrer des Zugfahrzeuges Z sein Führerhaus verlassen muß.

### Bezugszeichenliste

- A: Anhänger
- AG: Achsaggregat
- E: druckmittelbetätigte Einrichtung
- F: Fahrgestell
- Fv: Fahrgestellvorderteil
- Fh: Fahrgestellhinterteil
- LZ: längenveränderliche Zugeinrichtung
- Z: Zugfahrzeug
- 1: Betätigungszylinder
- 2: Sperrzylinder
- 3: Schaltventil
- 4: Handtaster
- 5: Druckmittelbehälter
- 6: Überströmventil
- 7: Schaltventil
- 8: Druckbegrenzungsventil
- 9: Zusatzbremszylinder
- 10: Bremsanlage
- 11: Federspeicher-Zylinder
- 12: Druckschalter
- 13: Kontrolleuchte
- 14: Rückfahrscheinwerfer
- 15: Schalter
- 16: Relais
- 17: Druckschalter
- 18: Näherungsschalter
- 19: Kontrolleuchte
- 20: Drossel
- 21: Außenrohr
- 22: Innenrohr
- 23: Zugöse
- 24: Riegelbolzen
- 25a: Riegelöffnung
- 25b: Riegelöffnung
- 26: Wippe
- 26a: Zwischenhebel
- 27: Rückzugfeder
- 28: Betätigungsstange
- 29: Schwenkhebel
- 29a: Riegelstift
- 30: Sperriegel

## Patentansprüche

1. Vorrichtung zur Längenveränderung des Achsabstandes eines Fahrzeugs, insbesondere zur Längenveränderung des Fahrgestells eines Anhängers oder Sattelanhängers, oder zur Längenveränderung der Zugeinrichtung eines aus Zugfahrzeug und Anhänger bestehenden Gliederzuges, wobei die Vorrichtung mindestens in den Endstellungen durch eine druckmittelbetätigte Einrichtung verriegelbar ist,
**dadurch gekennzeichnet,**
daß die druckmittelbetätigte Einrichtung (E) ausschließlich im Stillstand des Fahrzeugs bzw. des Gliederzuges mittels einer Sicherheitsschaltung betätigbar ist.

2. Gliederzug nach Anspruch 1, dadurch gekennzeichnet, daß die Sicherheitsschaltung ein vorzugsweise am Anhänger (A) angeordnetes Schaltventil (3) umfaßt, das durch einen vorzugsweise im Führerhaus des Zugfahrzeuges (Z) angeordneten Handtaster (4) betätigbar ist und das sowohl einen Betätigungszylinder (1) als auch einen Sperrzylinder (2) der druckmittelbetätigten Einrichtung (E) mit dem Druckmittelbehälter (5) des Anhängers (A) verbindet.

3. Gliederzug nach Anspruch 2, dadurch gekennzeichnet, daß die Sicherheitsschaltung ein zweites Schaltventil (7) umfaßt, das parallel zum ersten Schaltventil (3) angeordnet und damit gleichzeitig vom Handtaster (4) betätigbar ist und das seinerseits die Bremsanlage (10) des Anhängers (A) betätigt.

4. Gliederzug nach Anspruch 3, dadurch gekennzeichnet, daß das zweite Schaltventil (7) einen Zusatzbremszylinder (9) des Anhängers (A) betätigt.

5. Gliederzug nach Anspruch 3, dadurch gekennzeichnet, daß das zweite Schaltventil (7) einen die Radbremse des Anhängers (A) betätigenden Federspeicher-Zylinder (11) entlüftet.

6. Gliederzug nach Anspruch 2 oder 3, dadurch gekennzeichnet, daß die Schaltventile (3 bzw. 7) als magnetisch betätigte 3/2-Wege-Ventile ausgebildet sind.

7. Gliederzug nach mindestens einem der Ansprüche 1 bis 6, dadurch gekennzeichnet, daß der Handtaster (4) in Reihe mit dem durch Einlegen des Rückwärtsganges im Getriebe des Zugfahrzeuges (Z) einschaltbaren Rückfahrscheinwerfer (14) geschaltet ist.

8. Gliederzug nach mindestens einem der Ansprüche 1 bis 7, dadurch gekennzeichnet, daß die Sicherheitsschaltung ein parallel zum Rückfahrscheinwerfer (14) angeordnetes Relais (16) umfaßt, das durch einen vorzugsweise in der zum Sperrzylinder (2) führenden Druckmittelleitung angeordneten Druckschalter (17) betätigbar ist und durch Selbsthaltung die Freigabestellung des Betätigungszylinders (1) und Sperrzylinders (2) sowie gegebenenfalls die Betätigung der Radbremse des Anhängers (A) bei betätigtem Handtaster (4) aufrechterhält.

9. Gliederzug nach mindestens einem der Ansprüche 1 bis 8, dadurch gekennzeichnet, daß sowohl der Betätigungszylinder (1) als auch der Sperrzylinder (2) als ein durch Federkraft in seine Wirkstellung überführbarer Druckmittelzylinder ausgebildet ist, der durch Druckbeaufschlagung in eine Freigabestellung überführbar ist.

10. Gliederzug nach mindestens einem der Ansprüche 1 bis 9, dadurch gekennzeichnet, daß die Sicherheitsschaltung einen Näherungsschalter (18) umfaßt, durch den der Verriegelungszustand der Zugeinrichtung (LZ) mittels einer im Führerhaus des Zugfahrzeuges (Z) angebrachten Kontrolleuchte (19) signalisiert wird.

11. Anhänger, insbesondere Zentralachs- oder Drehschemelanhänger, mit einer längenveränderlichen Zugeinrichtung (LZ), die mindestens in der eingeschobenen Fahrstellung und in der ausgezogenen Endstellung durch eine druckmittelbetätigte Einrichtung (E) arretierbar ist, **gekennzeichnet durch** eine Sicherheitsschaltung nach mindestens einem der Ansprüche 2 bis 10.

12. Sicherheitsschaltung nach mindestens einem der Ansprüche 2 bis 10 zur Betätigung einer druckmittelbetätigen Einrichtung (E) zur Arretierung einer längenveränderlichen Zugeinrichtung (LZ) zwischen einem Zugfahrzeug (Z) und einem Anhänger (A).
